# EUROPEAN PATENT APPLICATION

(11) **EP 1 045 160 A1**
(43) Date of publication of application: **18.10.2000**
(21) Application number: 00830234.1
(22) Date of filing: 28.03.2000
(51) Int. Cl.: F16D 7/08

(54) **Torque limiting joint**

(30) Priority: 12.04.1999 IT BO990044 U
(71) Applicant: O.M.C. S.n.c. di DANTE CAVALLI & C., 40055 Villanova di Castenaso (Bologna) (IT)
(72) Inventor: Cavalli, Dante, 40055 Villanova di Castenaso (Bologna) (IT)
(74) Representative: Lanzoni, Luciano

(57) **Abstract**

Torque limiting joint comprising a substantially cylindrical hub (1) provided with a flange (6) having a plurality of first slots (7), a substantially disk-shaped element (2) coaxial to the hub, free to rotate thereon about a common axis of rotation (A), a plurality of balls (8) for transmitting torque housed in seats (9) provided with a layer (10) of anti-wear and anti-friction material and obtained in the disk element (2); the balls (8) are pressed against the flange (6) by a plate (4), which can be provided with second slots (18) cooperating with the balls (3), the plate (4) can be associated to the hub (1) with a grooved profile (14, 20); the balls (8) co-operate with the disk element (2), with the first (7) and the second slots (18) in such a way as to transmit a torque, the plate (4) is pressed by at least one Belleville washer (16), whose pressing force can be varied by means of an adjusting ring nut (17).

## Description

The present invention relates to a mechanically actuated torque limiting joint.

Known torque limiting joints are generally constituted by a hub destined to be coupled with a shaft or with a flange for the transmission of motion, and by a generally disk-shaped element, which can be a pulley for a belt transmission, a gear wheel for a chain or gear transmission. The disk element is kept in rotation with the hub by means of a clutch coupling comprising one or more friction surfaces and springs that maintain the friction surfaces in mutual contact in order to transmit a torque. When the value of the torque to be transmitted exceeds the value that the clutch coupling is able to transmit, the joint starts to slip and the desired uncoupling of the transmission is thereby obtained. The value of the transmissible torque can be varied by modifying the pressing force of the springs.

Such joints have been found to be unreliable and inaccurate in regard to the repeatability and value of transmissible torque. This is because the value of the transmissible torque is influenced by the friction of the contact surfaces. Friction between the surfaces of the clutch can vary considerably due to the presence of oil, humidity, aggressive agents, etc., and also due to variations in the temperature of the surfaces themselves. Moreover, due to the sliding that takes place when the transmission is uncoupled, the friction surfaces are subject to wear so that their thickness diminishes. Hence, in order to maintain the same pressure on the elements of the clutch, the pressing springs must be adjusted.

In other torque limiting joints, friction coupling is replaced by a coupling with rolling elements, such as balls, etc., that co-operate with the hub and the disk element. The balls are generally housed in slots obtained in the disk element and are pressed by springs that are directly in contact with the rolling elements themselves. These joints also present some defects, such as the high wear of the ball seats and of the spring surface in contact with the balls, as well as constructive complexity.

An aim of the present invention is to provide an improved torque limiting joint which allows a release at precise values of torque even if used in the presence of oil, humidity, aggressive agents, etc.

Another aim of the present invention is to provide an improved torque limiting joint which is reliable and has a long duration without malfunctions.

Yet another aim of the present invention is to provide an improved torque limiting joint which is simple and economical to produce and easy to mount.

In accordance with an aspect of the present invention, a torque limiting joint as specified in the independent claim is presented. The dependent claims refer to preferred and advantageous embodiments of the invention.

Embodiments of the present invention are described below, purely by way of non limiting example, with the aid of the accompanying drawings, in which:
- Figure 1 shows an axial section of a torque limiting joint according to the present invention;
- Figures 2 and 3 show some details of the joint of Figure 1;
- Figure 4 shows a partial view of the joint of Figure 1, with some parts removed for the sake of greater clarity;
- Figure 5 shows a cross section view of the torque limiting joint according to the plane S of Figure 1 with some parts removed the better to highlight others.

In accordance with the figures of the accompanying drawings, the torque limiting joint according to the present invention essentially comprises a hub 1 provided with an axis A, a disk shaped element 2 coaxial to the hub 1 and free to rotate relative thereto about the same axis A, a plurality of assemblies 3, housed in the disk element 2, and co-operating with the hub 1, a plate 4, of substantially annular shape, which presses on the assemblies 3 in order to allow rotation and the transmission of a twisting moment.

The hub 1 comprises a cylindrical part 5 and a flange 6; the latter is provided with first seats 7 destined to co-operate with the assemblies 3 for the transmission of the twisting moment. The first seats 7 are generally positioned on a circumference with its centre on the axis A and have a cone frustum shape. Each assembly 3 for transmitting the twisting moment is constituted by a pair of balls 8 positioned within appropriate slots 9 of the disk element 2. The slots 9 are holes with a generally cylindrical shape with axis parallel to the axis A and allow the rotation of the balls 8 at least about an axis B perpendicular to the axis A. The slots 9 can be provided with a layer or with a bushing 10 made of anti-wear and anti-friction material to reduce friction and wear when the balls 8 rotate on themselves. To increase their durability, the first seats 7 can also be treated superficially by hardening or with a layer or with a coating 11 of anti-wear material.

The assemblies 3 can also be constituted by other types of rolling bodies; for instance, they can be constituted by a pair of cylindrical or conical rollers (not shown herein) with their own axis of rotation positioned according to a radius perpendicular to the axis A. The slots 9 and the first seats 7 are modified accordingly; the slots 9 must in any case allow the rolling bodies to rotate freely. According to a simplified embodiment, not illustrated herein, the assemblies 3 can be constituted by individual rolling bodies, i.e. a single ball or roller.

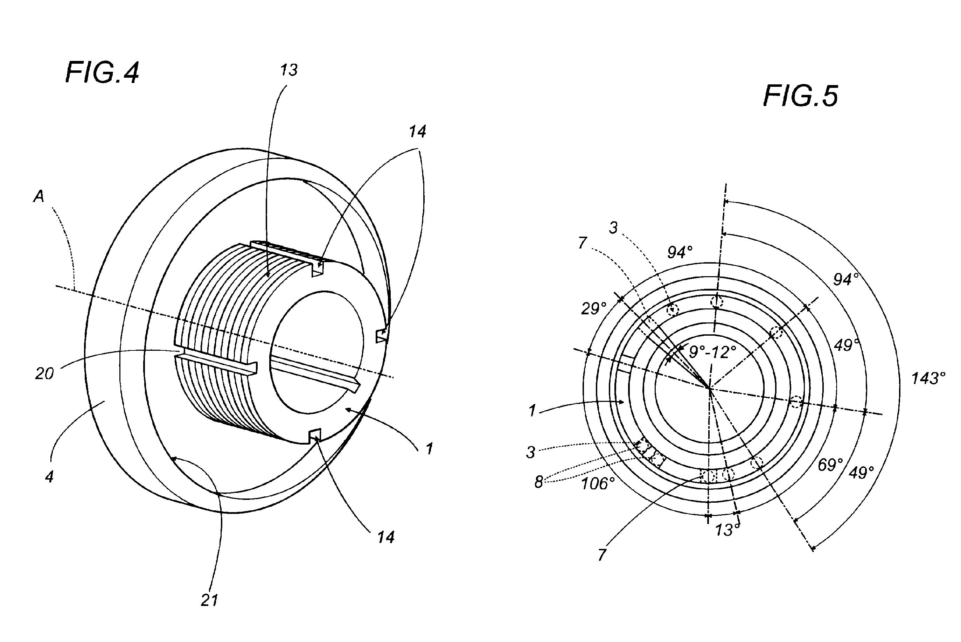

The cylindrical part 5 of the hub 1 is divided in the axial direction into a smooth section 12 and a threaded section 13 and comprises a series of slots 14, for instance four as shown in Figure 4. On the smooth section 12 is mounted, free to rotate, the disk element 2. Preferably, 2 a bushing 15 made of anti-friction material is positioned between the smooth section 12 and the disk element; alternatively, a bearing with rolling elements (not shown herein), such as needles, etc., can be mounted.

The plate 4 has a generally annular shape and is associated to the hub 1 by means of teeth 20 which are inserted into the grooves 14 of the hub 1. In this way, the plate 4 is constrained to rotate with the hub 1, but is free to move in the axial direction. The plate 4 presses in the axial direction on the balls 8 by means of springs 16, preferably Belleville washers 16, whose pressing force can be adjusted by means of a ring nut 17. The latter is screwed onto the threaded part 13 of the hub 1. By screwing or unscrewing the ring nut 17 it is possible to increase or reduce the pre-loading of the washers 16, then the ring nut 17 can be locked in the desired position by means of a screw 18 positioned transversely in a part of the ring nut 17 provided with a radial notch (not shown herein). The screw 18 by tightening the two parts of the ring nut 17 prevents the gear nut 17 itself from rotating any further on the threaded part 13.

The plate 4 comprises an annular seat 21 for housing the Belleville washers 6 and protect them against external contacts.

Similarly to the flange 6, the plate 4 is provided with second seats 18 also destined to co-operate with the assemblies 3 to transmit torque. The second seats 18 are similar to the first seats 7 and are generally positioned on a circumference centred on the axis A and are opposite to the assemblies 3. The second seats 18 have cone frustum shape and, to increase their durability, they can be superficially treated by hardening or coated with a layer or a coating 19 of anti-wear material. '

It is clear that the maximum transmissible twisting moment is divided into two parts between the first seats 7 and the second seats 18 which co-operate independently with the assemblies 3.

According to a simplified embodiment, not shown herein, the plate 4 lacks the second seats 18 and the seats for the grooves 14. Therefore, the plate 4 is not associated to the hub 1 for the transmission of the twisting moment, but serves only the purpose of pressing on the assemblies 3. In this case, for the same pressing force of the plate 4 on the assemblies 3, the maximum transmissible twisting moment will be smaller than the joint embodiment with the plate 4 provided with second seats 18.

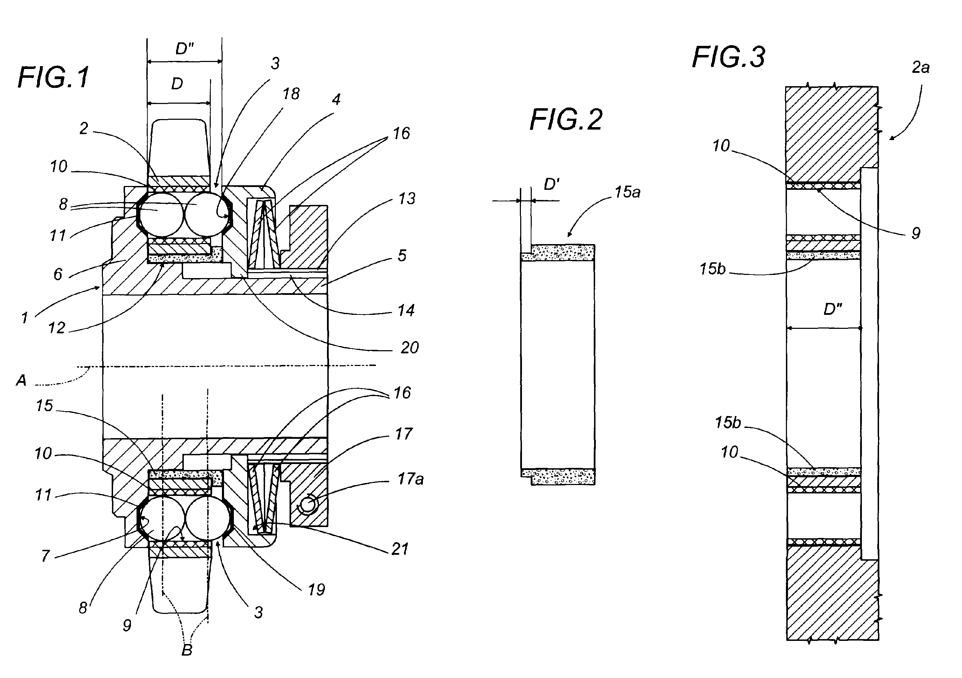

Figure 1 shows a torque limiting joint comprising a disk element 2 whose thickness D is lesser than the maximum width D" available in the joint. In order to house the disk element 2, the bushing 15 also presents a seat having width D corresponding to the thickness D of the disk element 2.

Figure 2 shows a modified bushing 15a which presents a seat whose width D' differs from that of Figure 1 in order to house disk elements 2 having width D'.

Figure 3 shows a modified disk element 2a whose width is greater than the width D" available in the joint. The disk element 2a presents a central area with lesser thickness, equal to the width D" available in the joint; the bushing 15b is modified yet again and presents, in the axial direction, an outer diameter corresponding to the seat housing the disk element 2a.

Normally the assemblies 3 for transmitting torque and the respective seats 7, 18 are distanced on the circumference with equal angles. For instance, six assemblies 3 positioned at a relative angle of 60 degrees are possible, or five assemblies 3 positioned at a relative angle of 72 degrees. Consequently, the re-coupling of the joint can take place also after a fraction of relative rotation of the hub 1 - disk element 2, equal to the single angular distance (respectively 60 or 72 degrees) of the assemblies 3 and of the seats 7, 18.

Figure 5 shows, by way of example, a joint in which the elements 3 for transmitting torque and the respective seats 4 are positioned at different angular distances, so that the elements 3 and the related seats 4 can be mutually aligned only for a well determined value of relative rotation of the hub 1 - disk element 2.

In the specific case, shown in Figure 5, the seats 7 (and the seats 18, not shown), and also the respective positions of the assemblies 3, are situated in such a way as to allow the re-coupling of the joint only after a complete turn equal to 360 degrees.

The angles at the centre, expressed in degrees, between the axes of each pair of adjacent seats 7 (and the adjacent seats 18, if present) are consecutively equal to 106, 29, 94, 49, 69, 13.

The angle at the centre corresponding to the width of the seat 7 (and of the seat 18) measured at the median position of the seat ranges between 9 and 12 degrees depending on the size of the joint and in any case it does not exceed 15 degrees. This particular configuration allows an always optimal axial positioning of the hub 1, of the disk element 2 of the plate 4, in case of the de-coupling of the joint after the transmissible torque is exceeded.

In this condition, the plate 4 always bears on at least three points, i.e. on at least three assemblies 3, thereby preventing any axial locking of the plate 4 due to inclined positioning. As Figure 5 shows, the maximum bearing angle between two assemblies 3, in the most unfavourable condition, is 143 degrees.

In use, the joint is positioned in such a way as to transmit rotation and twisting moment between the hub 1 and the disk element 2. It is clear that the torque limiting joint according to the present invention can transmit the driving rotation from the hub 1 to the disk element 2 and vice versa, and it is also evident that the joint can operate in both directions of rotation.

Considering, for instance, that the hub 1 is connected to the motor element, starting from the hub 1 the motion and the twisting moment are distributed between the flange 6 and the plate 4. Through the seats 7 and 18 the rotation passes to the balls 8 and thence to the disk element 2. The pressure of the plate 4 on the balls 3 prevents the latter from exiting the seats 7 and 18. However, if the twisting moment exceeds the pre-determined transmissible value, the pressure of the plate 4 is no longer sufficient and the balls 8 exit the seats 7 and 18 and accomplish the uncoupling of the transmission.

Since the transmission of motion and twisting moment between the seats 7 and 18 and the balls 8 is based on the shape of the elements, the values of the transmissible twisting moment are not influenced by the presence of oil, humidity, aggressive agents as is instead the case for elements operating by friction.

Given that the elements of the present torque limiting joint are not subject to wear, it is not necessary to provide for any adjustment and operating reliability is always guaranteed.

## Claims

1. A torque limiting joint comprising a substantially cylindrical hub (1) provided with a flange (6) having a plurality of first seats (7), a substantially disk-shaped element (2, 2a) coaxial to the hub, free to rotate thereon about a common axis of rotation (A), a plurality of assemblies (3) for transmitting a torque, housed in slots (9) obtained in the disk element (2, 2a), the elements for transmitting a torque co-operating with the first seats (7) of the flange (6), and being pressed against the flange (6) by mechanical elastic means (16), whose pressing force can be varied with adjustment means (17, 18), characterised in that it comprises a substantially annular plate (4), axially movable, connected in rotation with the hub (1), said plate being positioned between the elements (3) for transmitting torque and the mechanical elastic means (16), and in that the slots (9) are provided with a layer (10) of anti-wear and anti-friction material.

2. A torque limiting joint as claimed in claim 1, characterised in that the slots (9) of the disk element are holes (9) with cylindrical shape with axis parallel to the axis of rotation (A), that each assembly for transmitting torque comprises two balls (8) in mutual contact positioned parallel to the axis of rotation (A), and that said balls (8) are free to rotate within the respective slots (9) of the disk element (2, 2a).

3. A torque limiting joint as claimed in claim 1 or 2, characterised in that between the disk element (2, 2a) and the hub (1) is positioned a bushing (15, 15a, 15b) made of anti-friction material or a rolling bearing.

4. A torque limiting joint as claimed in one of the previous claims, characterised in that the plate (4) comprises a plurality of second seats (18) destined partially to house and co-operating with the elements (3) for transmitting torque.

5. A torque limiting joint as claimed in one of the previous claims, characterised in that the plate (4) comprises a cylindrical seat (21) for housing the mechanical elastic means (16) and in that the latter comprise at least a Belleville washer (16).

6. A torque limiting joint as claimed in one of the previous claims, characterised in that the plate (4) is associated to the hub (1) by means of a coupling with grooved profile (14, 20).

7. A torque limiting joint as claimed in one of the previous claims, characterised in that the means for adjusting the mechanical elastic means (16) comprise a ring nut (17) which can be locked with a screw (18) transverse to the axis of rotation of the ring nut itself.

8. A torque limiting joint as claimed in one of the previous claims, characterised in that the first (7) and second (18) seats are provided with a layer (11, 19) of anti-wear and anti-friction material.

9. A torque limiting joint as claimed in one of the previous claims, characterised in that the assemblies (3) for transmitting a torque and the respective seats (7, 18) are positioned in such a way as to present the angles measured at the centre on the axis (A), expressed in degrees, between the axes of each pair of consecutively adjacent assemblies (3) or seats (7; 18) equal to 106, 29, 94, 49, 69, 13, and in that the amplitude of the angle at the centre of the seats (7; 18) measured at the lesser diameter is smaller than 15 degrees and preferably ranges between 9 and 12 degrees.
